# EUROPÄISCHE PATENTSCHRIFT

(11) **EP 2 106 392 B1**
(45) Veröffentlichungstag und Bekanntmachung des Hinweises auf die Patenterteilung: **27.08.2014**
(21) Anmeldenummer: 07858088.3
(22) Anmeldetag: 21.12.2007
(51) Int. Cl.: C04B 35/486, C04B 35/64, C04B 37/00, A61C 8/00, F02F 7/00

(54) **VERFAHREN ZUR HERSTELLUNG EINER MEHRTEILIGEN KONSTRUKTION SOWIE EINE SOLCHE**
METHOD FOR PRODUCING A MULTIPART CONSTRUCTION AND SUCH A CONSTRUCTION
PROCÉDÉ DE FABRICATION D'UNE STRUCTURE EN PLUSIEURS PIÈCES ET STRUCTURE DE CE TYPE

(30) Priorität: 27.12.2006 DE 102006062305; 07.02.2007 EP 07002574
(43) Veröffentlichungstag der Anmeldung: 07.10.2009
(73) Patentinhaber: DeguDent GmbH, 63457 Hanau (DE)
(72) Erfinder: HOCK, Elmar, 63776 Mömbris-Königshofen (DE); FECHER, Stefan, 63867 Johannesberg (DE); VÖLKL, Lothar, 63773 Goldbach (DE)
(74) Vertreter: Stoffregen, Hans-Herbert
(86) Internationale Anmeldenummer: PCT/EP2007/064477
(87) Internationale Veröffentlichungsnummer: WO 2008/080902

(56) Entgegenhaltungen:
- WO-A-96/29951
- WO-A-99/47065
- DE-A1- 3 122 345
- GB-A- 2 210 363
- JP-A- H04 248 013
- DATABASE WPI Week 198615 Derwent Publications Ltd., London, GB; AN 1986-096850 XP002458478 -& JP 61 040884 A (KORANSHA KK) 27. Februar 1986 (1986-02-27)

## Beschreibung

Die Erfindung bezieht sich auf ein Verfahren zur Herstellung einer mehrteiligen Konstruktion aus gesintertem Oxidkeramikmaterial, wie teilstabilisiertem Zirkonoxid, umfassend ein erstes Teil, das bereichsweise ein zweites Teil derart umgibt, dass ein Lösen des ersten Teils von dem zweiten Teil bei unzerstörtem ersten und/oder zweiten Teil unterbunden ist, unter Verwendung der Verfahrensschritte:
- Herstellen eines einteiligen ersten Formteils und eines einteiligen zweiten Formteils aus einem Oxidkeramik-Rohling, wobei das erste Formteil und das zweite Formteil gegenüber dem ersten Teil und dem zweiten Teil um einen die Sinterschrumpfung kompensierenden Vergrößerungsfaktor vergrößert ist,
- Durchsintern des zweiten Formteils zur Herstellung des zweiten Teils,
- Zusammensetzen des zweiten Teils und des ersten Formteils und anschließendes gemeinsames Sintern.

Keramikmaterialien, insbesondere Zirkonoxid, werden aufgrund der guten thermischen Beständigkeit als technische Keramik im Maschinenbau insbesondere wegen des geringen Verschleißes umfassend genutzt. Aufgrund der Bioverträglichkeit und der chemischen Inertheit werden auch im Bereich der Zahnmedizin Keramikmaterialien als Basis zur Anfertigung von Kronen-Brückengerüsten mit Hilfe von CAD/CAM-Verfahren oder bei Wurzelstiften und metallfreien Zahnimplantaten eingesetzt. Die Herstellung der entsprechenden Bauteile erfolgt dabei grundsätzlich derart, dass zunächst ein Grünling hergestellt wird und dieser zum Beispiel durch Fräsen bearbeitet wird, wobei zunächst eine vergrößerte Form hergestellt wird, die gegenüber der Endform in einem

Umfang vergrößert ist, dass die Sinterschrumpfung kompensiert wird. Hierdurch ergibt sich eine vereinfachte Bearbeitung, so dass hochpräzise kleine Bauteile hergestellt werden können.

Anwendungsbeispiele in der Zahnmedizin sind der WO-A-99/47065 oder der WO-A-96/29951 zu entnehmen.

Auch werden bereits technische Bauteile nach den entsprechenden Verfahren hergestellt, zum Beispiel Düsen, Ventile, Pumpenteile, Fadenführungen, Positionierstifte für die Schweißtechnik oder Gewinde.

Bei mehrteiligen Konstruktionen besteht ein Bauteil, das ein anderes aufnehmen soll, aus mehreren Teilen, da andernfalls ein Zusammenfügen nicht erfolgen kann.

Ein Verfahren der eingangs genannten Art ist der DE-A-31 22 345 zu entnehmen. Dabei weist das erste Teil eine Bohrung auf, in die das zweite Teil zentrisch eingelegt wird. Da das zweite Teil bereits gesintert ist und das Außenteil, also erste Teil der gesamten Schwindung während des Sinterprozesses unterliegt, entsteht in den Berührungsstellen zwischen den Teilen eine Presspassung während des Sinterprozesses und eine vollkommene Versinterung der Berührungsflächen. Eine Beweglichkeit zueinander ist nicht mehr möglich.

Um nach der GB-A-2 210 363 eine Presspassung zwischen zwei Teilen zu erreichen, wird in eine Bohrung eines äußeren porösen Körpers aus Keramik ein Abschnitt eines dichteren inneren Körpers aus Keramik eingesetzt, um sodann die Körper gemeinsam zu sintern.

Der JP-04248013 ist ein Kugelgelenk zu entnehmen, das aus Keramik besteht. Zunächst wird das die Kugel aufweisende Teil gesintert, um sodann die Kugel in einer Aufnahme einer Stange vor dessen Sintern einzubringen.

Der vorliegenden Erfindung liegt die Aufgabe zugrunde, ein Verfahren der eingangs genannten Art sowie eine mehrteilige Konstruktion zur Verfügung zu stellen, die aus durchgesintertem Oxidkeramikmaterial besteht, ohne dass es erforderlich ist, dass die Einzelteile mehrteilig ausgebildet sind, um ein Zusammenfügen zu ermöglichen.

Verfahrensmäßig wird die Aufgabe dadurch gelöst, dass als erstes Formteil ein solches mit einer Durchgangsöffnung verwendet wird, deren wirksamer Querschnitt nach dem Sintern kleiner als der wirksame Querschnitt des zweiten Teils vor und hinter der Durchgangsöffnung ist.

Aufgrund der erfindungsgemäßen Lehre bietet sich die Möglichkeit, Konstruktionsteile zusammenzufügen, die in ihren Endgeometrien ohne Teilung nicht zusammensetzbar wären.

Erfindungsgemäß können mehrteilige Konstruktionen hergestellt werden, deren Einzelteile eine genaue definierte geometrische Ausrichtung und Zuordnung zueinander einhalten müssen. Es werden aus Keramikrohlingen die einteiligen Einzelteile in einer Größe hergestellt, die um den Sinterschrumpfungsfaktor in allen Richtungen vergrößert ist, um diesen folglich auszugleichen. Sodann wird zumindest das Formteil durchgesintert, das von dem anderen Teil aufgenommen werden soll. Anschließend wird das durchgesinterte Teil mit dem anderen noch nicht durchgesinterten Teil zusammengefügt und beide Teile werden anschließend durchgesintert. Hierdurch ergibt sich eine Gesamtkonstruktion mit definierter Ausrichtung und Zuordnung der Einzelteile, so dass im gewünschten Umfang zum Beispiel Drehlager, Axiallager, Presspassung oder ähnliches erzielbar sind, ohne dass die Einzelteile mehrteilig ausgebildet sein müssen. Eine hohe Passgenauigkeit mit gegebenenfalls gewünschtem Spiel zwischen dem ersten und zweiten Teil im durchgesinterten Zustand, also Endzustand, ist erzielbar.

Als Rohling kann ein grüner Rohling aus gepresstem Oxidkeramikpulver oder ein vorgesinterter Rohling aus gepresstem Oxidkeramikpulver verwendet werden. Beide Ausgangsmaterialien ermöglichen eine einfache Handhabung, wobei aufgrund der im Vergleich zu dem Endteil gegebenen vergrößerten Form eine Bearbeitung ermöglicht wird, die zu einer hochpräzisen Endgeometrie führt.

Als Oxidkeramikpulver sollte wenigstens ein Metalloxidpulver der Gruppe Al₂O₃, TiO₂, Y₂O₃, BaTiO₃, Zirkonoxid, Zirkonoxidmischkristall verwendet werden. Insbesondere ist vorgesehen, dass ein Zirkonoxidpulver eingesetzt wird, das von der Firma TOSOH unter der Bezeichnung 3Y-TZP angeboten wird.

Insbesondere wird ein Zirkonoxidpulver einer Zusammensetzung benutzt:

| | |
|---|---|
| 90 - 98 Gew.-% | Zirkonoxid |
| 0 - 4 Gew.-% | Hafniumoxid |
| 1 - 7 Gew.-% | Yttriumoxid |
| 0 - 1 Gew.-% | eines der Oxide der Elemente Aluminium, Gallium, Germanium, Indium, Zink, Blei, der Lanthanide |
| 0 - 2 Gew.-% | oxidische färbende Zusätze. |

Entsprechende färbende Zusätze können Er₂O₃, Pr₆O₁₁ oder Fe₂O₃ sein.

Das Oxidkeramikpulver selbst wird zunächst insbesondere isostatisch bei einem Druck P mit 150 MPa ≤ P ≤ 350 MPa, vorzugsweise bei ca. 200 MPa verpresst, um nach gegebenenfalls einer Wärmevorbehandlung vorgesintert zu werden. Bevorzugte Temperaturen liegen im Bereich zwischen 600 °C und 1200 °C, wobei eine Zeitdauer von 0,5 h und 6 h zu wählen ist. Besonders gute Ergebnisse lassen sich erzielen, wenn das Vorsintern bei etwa 850 °C über 2 h erfolgt.

Ein axiales Pressen ist selbstverständlich gleichfalls möglich.

Das Durchsintern selbst sollte im Temperaturbereich zwischen 1300 °C und 1650 °C über einen Zeitraum von 1 h bis 3 h durchgeführt werden, wobei ein bevorzugter Wertebereich bei 1500 °C und 2 h liegt.

Unabhängig hiervon sollte das Durchsintern in einem Umfang erfolgen, dass der Rohling auf 90 % bis 100 %, insbesondere 96 % bis 100 % der theoretischen Dichte dichtgesintert wird.

Sowohl beim Vorsintern, insbesondere jedoch beim Durchsintern, sollte die Erwärmung der Teile ausschließlich durch Konvektion erfolgen, ohne dass eine Erhitzung durch Wärmestrahlung gegeben ist. Hierdurch ist sichergestellt, dass die durchgesinterten Bauteile eine überaus hohe Maßhaltigkeit zeigen. Messungen haben ergeben, dass die Teile mit einer Genauigkeit im Bereich von 1 µm und 2 µm herstellbar sind, so dass eine hochpräzise definierte Einpassung der Teile zueinander gegeben ist.

Bei der Herstellung der Teile selbst kann eine kombinierte Dreh- und Fräsbearbeitung erfolgen, wodurch sich herstellungstechnische Vorteile und damit Kostenersparnisse ergeben.

Die Erfindung zeichnet sich auch durch ein Konstruktionselement hergestellt nach dem zuvor erläuterten Verfahren dadurch aus, dass das erste Teil ein Gehäuse mit einer Öffnung ist, die von einer Kolbenstange mit Kolben als das zweite Teil durchsetzt ist, wobei wirksamer Querschnitt der Öffnung kleiner als Querschnitt des innerhalb des Gehäuses angeordneten Kolbens ist.

Ferner zeichnet sich die Erfindung durch ein Konstruktionselement hergestellt nach dem zuvor erläuterten Verfahren dadurch aus, dass eine vorzugsweise abgekröpfte Welle ein zweites Teil ist und dass ein Abschnitt der Welle von einer Lochscheibe als das erste Teil umgeben ist, wobei der Abschnitt zur Wellenachse einen Versatz bzw. die Welle Abschnitte mit Wirkabmessungen aufweist bzw. aufweisen, der bzw. die größer als Durchbrechung der Scheibe im durchgesinterten Zustand ist, die von der Welle durchsetzt ist.

Auch zeichnet sich die Erfindung durch ein Konstruktionselement aus, das ein Zahnimplantat ist mit einer einen zahntechnischen Aufbau tragenden Implantatkomponenten als das zweite Teil und mit einer von einer Schraube als das erste Teil durchsetzten Durchgangsöffnung, wobei die Schraube verbreiterte Enden mit jeweils einem Querschnitt aufweist, der größer als wirksamer Querschnitt der Durchgangsöffnung ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels:

Es zeigen:
- Fig. 1: Gehäuse und Stößel einer Pumpe im ungesinterten Zustand,
- Fig. 2: das Gehäuse im ungesinterten Zustand und der Stößel im gesinterten Zustand,
- Fig. 3: das Gehäuse mit in diesem verstellbaren Stößel im durchgesinterten Zustand,
- Fig. 4: eine Gelenkhülse mit Gelenk im ungesinterten Zustand,
- Fig. 5: die Gelenkhülse gemäß Fig. 4 im ungesinterten und das Gelenk im gesinterten Zustand,
- Fig. 6: die Gelenkhülse und das Gelenk gemäß Fig. 4 und 5 im gesinterten Zustand,
- Fig. 7: ein Implantat und eine Schraube im ungesinterten Zustand,
- Fig. 8: das Implantat gemäß Fig. 7 im ungesinterten und die Schraube im gesinterten Zustand,
- Fig. 9: das Implantat und die Schraube gemäß Fig. 7 und 8 im gesinterten Zustand,
- Fig. 10: eine Welle mit einem Ring im ungesinterten Zustand,
- Fig. 11: die Welle gemäß Fig. 10 im gesinterten Zustand und
- Fig. 12: die Welle und der Ring gemäß Fig. 10 und 11 im gesinterten Zustand.

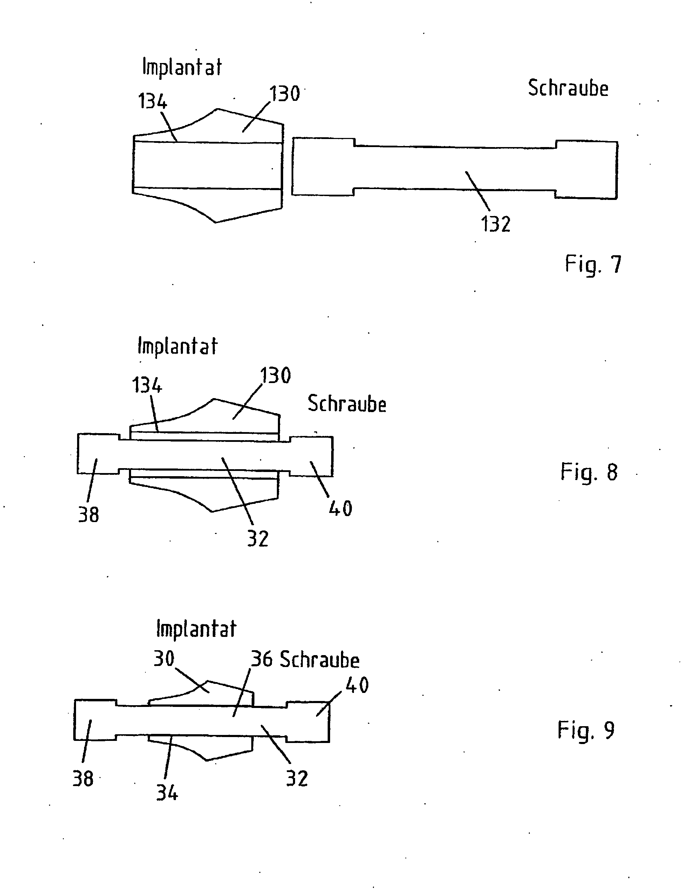

Anhand der zeichnerischen Darstellungen soll rein prinzipiell das erfindungsgemäße Verfahren zur Herstellung mehrteiliger Konstruktionen erläutert werden, wobei zwischen den ineinander greifenden Teilen eine hohe Passgenauigkeit und gewünschte Dichtung gegeben ist. Dabei fallen die mehrteiligen Konstruktionen der Fig. 7 bis 12 unter die Erfindung.

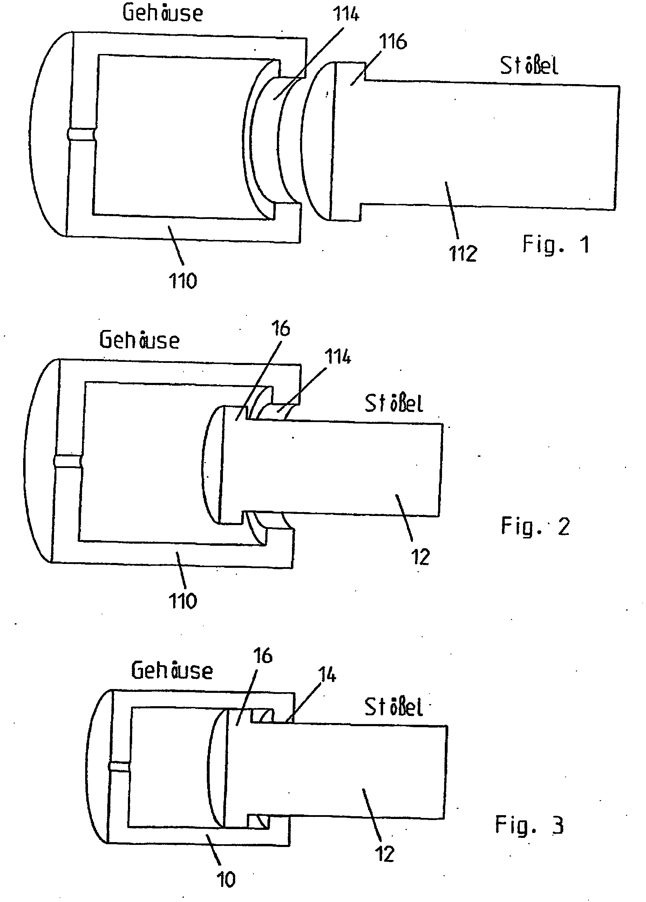

In den Fig. 1 - 3 wird das erfindungsgemäße Verfahren anhand einer prinzipiell dargestellten Pumpe bestehend aus einem Gehäuse 10 und einem Stößel beschrieben.

In Fig. 3 ist die Endpassung des Stößels 12 und des Gehäuses 10 dargestellt, wobei der Stößel 12 eine Öffnung 14 des Gehäuses 10 durchsetzt und mit seinem Kopf 16 innerhalb des Gehäuses 10 hin- und her bewegbar ist. Dabei weist der Kopf 16 einen Außendurchmesser auf, der größer ist als der der Öffnung.

Um eine entsprechende Konstruktion nach dem Stand der Technik herzustellen, muss das Gehäuse zweiteilig ausgebildet sein, um den Stößel mit seinem Kopf in den Innenraum des Gehäuses positionieren zu können. Erfindungsgemäß kann das Gehäuse 10 jedoch einteilig ausgebildet sein, da man die Eigenschaften von Keramikmaterialien nutzt, die während des Sinterns erheblich schrumpfen.

Sowohl der Stößel 12 als auch das Gehäuse 16 bestehen aus Oxidkeramikmaterial, insbesondere aus Zirkonoxid, wie dieses von der Firma TOSOH unter der Bezeichnung TZ-3YB oder TZ-3YB-E angeboten wird. Das entsprechende Zirkonoxidpulvermaterial wird verpresst, wobei insbesondere ein isostatisches Pressen mit einem Druck von 200 MPa erfolgt. Die so hergestellten Grünlinge werden sodann bearbeitet. Dies kann durch Drehen, Fräsen oder Kombination dieser erfolgen. Dabei werden Teile mit einer Geometrie hergestellt, die gegenüber dem durchgesinterten Stößel 12 bzw. Gehäuse 10 um einen die Sinterschrumpfung kompensierenden Vergrößerungsfaktor vergrößert ist. Die den Endbauteilen 10, 12 bzw. Abschnitten 14, 16 dieser entsprechenden Teile (Formteile) des Rohlings sind in der Fig. 1 mit den Bezugszeichen 110, 112, 114, 116 gekennzeichnet.

Aus der Darstellung der Fig. 1 wird ersichtlich, dass die Bauteile 110, 112 nicht ineinander greifen können, da der Stößelkopf 116 größer als der lichte Durchmesser der Öffnung 114 ist.

Sind die Bauteile 110, 112 aus einem Grünling gedreht bzw. gefräst worden, so besteht auch die Möglichkeit als Rohling einen vorgesinterten Körper zu verwenden, der bearbeitet wird.

Unabhängig hiervon wird in einem nachfolgenden Verfahrensschritt der aus dem Grünling oder dem vorgesinterten Rohling bestehende Stößel 112 mit Stößelkopf 116 durchgesintert. Dies erfolgt vorzugsweise bei einer Temperatur im Bereich von 1500 °C über einen Zeitraum von 2 h. Zuvor erfolgt eine Vorsinterung, die bei einer Temperatur von in etwa 800 °C gleichfalls über 2 h vorgenommen wird.

Bei der Wärmebehandlung, also beim Durchsintern bzw. Vorsintern sollte darauf geachtet werden, dass die Rohlinge allein durch Konvektion und nicht durch direkte Strahlungsbeaufschlagung erwärmt werden.

Durch die Schrumpfung bedingt verändert sich die Dimensionierung des Stößels 112 derart, dass der Kopf 16 die Öffnung 114 des Gehäuses 110 durchsetzen kann, wie sich aus der Fig. 2 ergibt. Sodann erfolgt ein erneutes Durchsintern entsprechend der zuvor erläuterten Verfahrensweise mit der Folge, dass das Gehäuse 110 schrumpft, um somit die gewünschte geometrische Anpassung zu dem Stößel 12 und dem Stößelkopf 16 zu erzielen. Eine Formveränderung des Stößels 112 erfolgt nicht mehr.

Erfindungsgemäß werden die Teile der mehrteiligen Konstruktion teilweise unabhängig voneinander gesintert, um in unterschiedlichen Sinterzuständen zusammengefügt zu werden, wodurch eine Einpassung der Teile ermöglicht wird.

Da die Einzelteile hochpräzise herstellbar sind, ist folglich die mehrteilige Konstruktion in ihrer Endgeometrie gleichfalls hochgenau, so dass eine definierte geometrische Zuordnung sichergestellt ist.

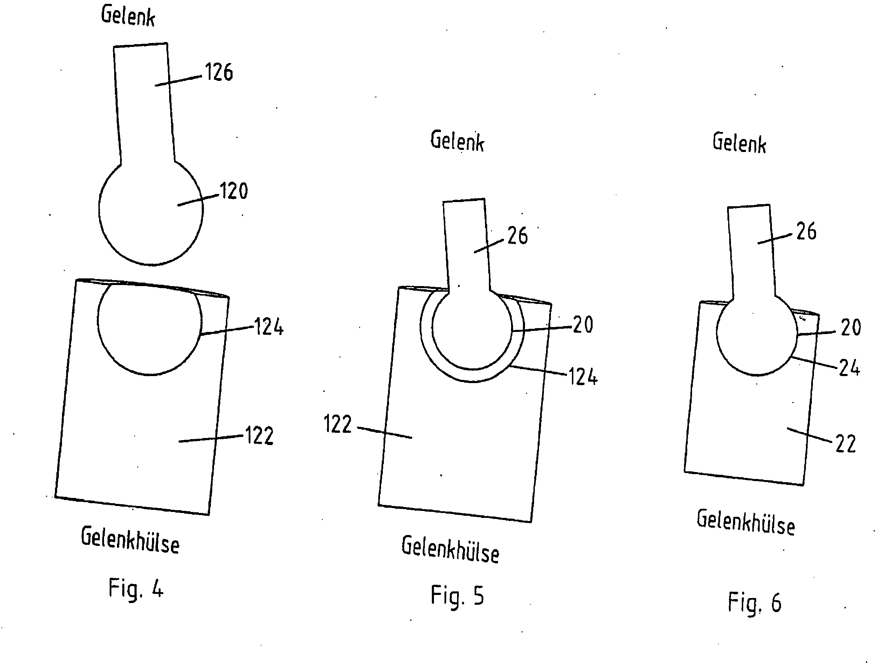

Das erfindungsgemäße Verfahren soll auch anhand der den Fig. 4 bis 8 zu entnehmenden Beispiele näher erläutert werden, wobei die Herstellung der einzelnen Elemente entsprechend zuvor erfolgter Beschreibung durchgeführt werden kann.

In den Fig. 4 bis 6 wird ein Gelenk 26 mit Gelenkkopf 20 passgenau in eine Aufnahme 24 einer Gelenkhülse 22 eingebracht, wobei sowohl das Gelenk 26 als auch die Gelenkhülse 22 aus Oxidkeramikmaterial bestehen. In Fig. 4 sind die Elemente als Grünlinge dargestellt und mit den Bezugszeichen 120, 122, 124, 126 gekennzeichnet. In diesem Zustand passt der Gelenkkopf 126 nicht in die Aufnahme 124 der Gelenkhülse 122. Vielmehr weisen die Elemente 120, 122 eine Geometrie auf, die gegenüber dem durchgesinterten Gelenk 20 bzw. der Gelenkhülse 22 um einen die Sinterschrumpfung kompensierenden Vergrößerungsfaktor vergrößert ist. Sodann wird das Gelenk 120 gesintert, so dass dessen Kopf 20 in die Öffnung 124 der Gelenkhülse 122 einbringbar ist. Anschließend wird die Gelenkhülse 122 mit dem in die Öffnung 124 eingesetzten durchgesinterten Gelenkkopf 20 gesintert, so dass die gewünschte passgenaue Verbindung von Gelenk 20 und Gelenkhülse gemäß Fig. 6 erzielbar ist.

Eine hohe Passgenauigkeit ergibt sich gemäß der erfindungsgemäßen Lehre auch zwischen einem Implantat 30 und einer Schraube 32, die eine Durchgangsbohrung 34 mit ihrem Schaft 36 durchsetzt, der endseitig Köpfe 38, 40 aufweist, deren Durchmesser größer als der Durchmesser der Durchgangsbohrung 34 ist. Um eine entsprechende Einpassung von Implantat 30 und Schraube 32 zu ermöglichen, werden entsprechend der erfindungsgemäßen Lehre zunächst Grünlinge von Implantat 130 und Schraube 132 hergestellt, die prinzipiell in Fig. 7 dargestellt sind. Sodann wird die Schraube 132 gesintert. Die Dimensionierung von Bohrung 134 und Kopf 138, 140 ist so aufeinander abgestimmt, dass nach der durch das Sintern erfolgten Schrumpfung die Köpfe 38, 40 einen Durchmesser aufweisen, der kleiner als die Durchgangsöffnung 134 in dem Implantat 130 als Grünling ist, wie die Fig. 8 verdeutlicht. Nachdem die durchgesinterte Schraube 32 in der Durchgangsöffnung 134 des nicht durchgesinterten Implantats 130 eingesetzt ist, also die Köpfe 38, 40 seitlich über dem Implantat 130 vorstehen, erfolgt ein Durchsintern, um das von der Schraube 32 durchsetzte Implantat 30 entsprechend der Fig. 9 zu erhalten, das passgenau, gegebenenfalls mit gewünschtem Spiel die Schraube 32 aufnimmt.

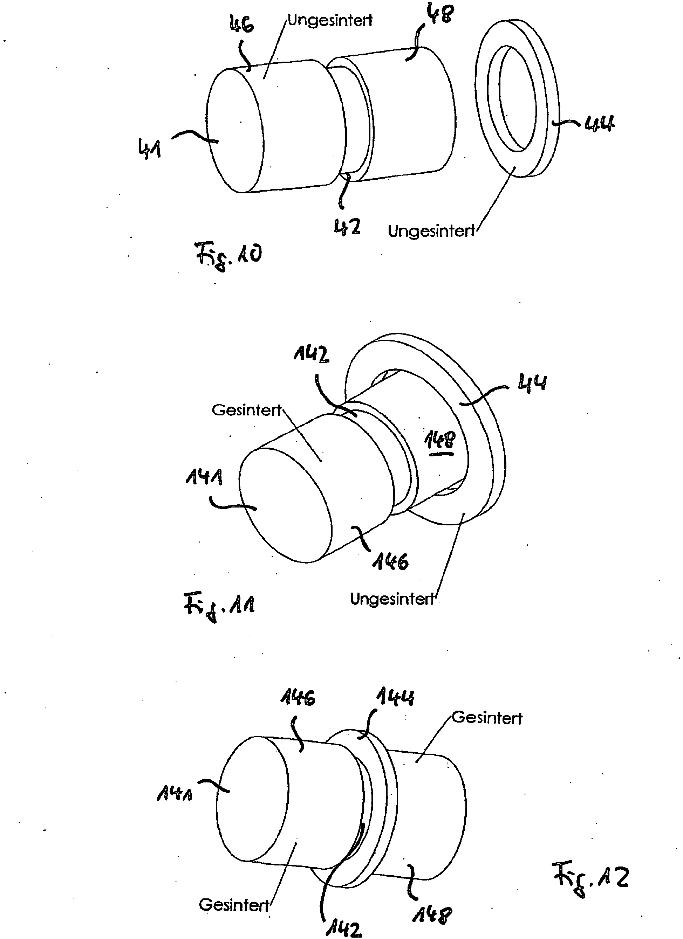

Anhand der Fig. 10 bis 12 ist eine weitere Konstruktion rein prinzipiell dargestellt, deren Elemente aus durchgesintertem Oxidkeramikmaterial bestehen, wobei ein Zusammenfügen dadurch erfolgt, dass ein erstes Teil durchgesintert und das zweite Teil ungesintert oder vorgesintert ist, um sodann beide Teile gemeinsam durchzusintern. So ist in Fig. 10 ein Abschnitt einer Welle 41 dargestellt, die eine Nut 42 aufweist. Insoweit kann man auch von einer gekröpften Welle sprechen. Um in die Nut 42 einen einteiligen Ring 44 einzubringen, dessen Innendurchmesser im durchgesinterten Zustand kleiner als die die Nut 42 begrenzenden Abschnitte 46, 48 der Welle 41 im durchgesinterten Zustand sind, wird erfindungsgemäß wie folgt vorgegangen. Die ungesinterte oder vorgesinterte Welle 41 wird zunächst durchgesintert (Welle 141 in Fig. 11). Durch das Sintern der Welle 41 erfolgt ein Schrumpfen. Der Innendurchmesser des Rings 44 im ungesinterten bzw. vorgesinterten Zustand weist einen Innendurchmesser auf, der größer als der jeweilige Durchmesser der Abschnitte 146 bzw. 148 ist, die die Nut 142 der durchgesinterten Welle 141 begrenzen. Anschließend wird der Ring 44 auf die Nut 142 ausgerichtet, um sodann den Ring 44 zusammen mit der gesinterten Welle 141 durchzusintern. Hierbei erfährt die bereits gesinterte Welle 141 eine weitere Schrumpfung nicht. Einzig und allein der Ring 144 schrumpft. Dabei ist der Innendurchmesser des Rings 44 so gewählt, dass aufgrund der beim Durchsintern auftretenden Schrumpfung Endabmessungen vorliegen, bei denen der Innendurchmesser des gesinterten Rings 144 kleiner als Außendurchmesser der angrenzenden Abschnitte 146, 148 ist. Somit erfolgt ein Zusammenfügen der Bauteile 141, 144, die unlösbar miteinander verbunden sind, ohne dass beim Zusammenbau der Ring 144 mehrteilig ausgebildet sein muss.

## Patentansprüche

1. Verfahren zur Herstellung einer mehrteiligen Konstruktion aus gesintertem Oxidkeramikmaterial, wie teilstabilisiertem Zirkonoxid, umfassend ein erstes Teil (30, 144), das bereichsweise ein zweites Teil (32, 141) derart umgibt, dass ein Lösen des ersten Teils von dem zweiten Teil bei unzerstörtem ersten und/oder zweiten Teil unterbunden ist,
unter Verwendung der Verfahrensschritte:
- Herstellen eines einteiligen ersten Formteils (130, 44) und eines einteiligen zweiten Formteils (132, 41) aus einem Oxidkeramik-Rohling, wobei das erste Formteil und das zweite Formteil gegenüber dem ersten Teil (30, 144) und dem zweiten Teil (32, 141) um einen die Sinterschrumpfung kompensierenden Vergrößerungsfaktor vergrößert ist,
- Durchsintern des zweiten Formteils zur Herstellung des zweiten Teils (32, 141),
- Zusammensetzen des zweiten Teils und des ersten Formteils und anschließendes gemeinsames Sintern,
**dadurch gekennzeichnet,**
**dass** als erstes Formteil (132, 44) ein solches mit einer Durchgangsöffnung verwendet wird, deren wirksamer Querschnitt nach dem Sintern kleiner als der wirksame Querschnitt des zweiten Teils (32, 141) vor und hinter der
Durchgangsöffnung ist.

2. Verfahren nach Anspruch 1,
**dadurch gekennzeichnet,**
**dass** als Rohling ein grüner Rohling aus gepresstem Oxidkeramikpulver verwendet wird.

3. Verfahren nach Anspruch 1,
**dadurch gekennzeichnet,**
**dass** Oxidkeramikpulver durch axiales Pressen oder isostatisch bei einem Druck p mit 150 MPa ≤ p ≤ 350 MPa verpresst wird.

4. Verfahren nach zumindest einem der vorhergehenden Ansprüche,
**dadurch gekennzeichnet,**
**dass** als Rohling ein vorgesinterter Rohling aus gepresstem Oxidkeramikpulvermaterial verwendet wird.

5. Verfahren nach zumindest einem der vorhergehenden Ansprüche,
**dadurch gekennzeichnet,**
**dass** der grüne Rohling bei einer Temperatur T₁ mit T₁ ≥ 450 °C, insbesondere 600 °C ≤ T₁≤ 1200 °C über eine Zeit t₁ mit 0,5 h ≤ t₁ ≤ 6h vorgesintert wird.

6. Verfahren nach zumindest einem der vorhergehenden Ansprüche,
**dadurch gekennzeichnet,**
**dass** der vorgesinterte Rohling bei einer Temperatur T₂ mit 1300 °C ≤ T₂ ≤ 1650 °C über eine Zeit t₂ mit 1 h ≤ t₂ ≤ 3h dichtgesintert wird.

7. Verfahren nach zumindest einem der vorhergehenden Ansprüche,
**dadurch gekennzeichnet,**
**dass** als Oxidkeramikpulver wenigstens ein Metalloxidpulver der Gruppe Al₂O₃, TiO₂,MgO, Y₂O₃, BaTiO₃, Zirkonoxid, Zirkonoxidmischkristallpulver verwendet wird.

8. Verfahren nach zumindest einem der vorhergehenden Ansprüche,
**dadurch gekennzeichnet,**
**dass** als Zirkonoxidmischkristallpulver ein solches mit der Zusammensetzung verwendet wird:
| | |
|---|---|
| 90 - 98 Gew.-% | Zirkonoxid |
| 0 - 4 Gew.-% | Hafniumoxid |
| 1 - 7 Gew.-% | Yttriumoxid |
| 0 - 1 Gew.-% | eines der Oxide der Elemente Aluminium, Gallium, Germanium, Indium, Zink, Blei, der Lanthanide |
| 0 - 2 Gew.-% | oxidische färbende Zusätze, |
wobei färbende Zusätze vorzugsweise sind:
Er₂O₃, Pr₆O₁₁ oder Fe₂O₃.

9. Verfahren nach zumindest einem der vorhergehenden Ansprüche,
**dadurch gekennzeichnet,**
**dass** der Rohling auf 90 % bis 100 %, insbesondere 96 % bis 100 % der theoretischen Dichte dichtgesintert wird.

10. Konstruktion hergestellt nach Anspruch 1,
**dadurch gekennzeichnet,**
**dass** eine vorzugsweise abgekröpfte Welle das zweite Teil (141) ist und dass ein Abschnitt der Welle von einer Lochscheibe (144) umgeben ist, wobei der Abschnitt zur Wellenachse einen Versatz oder die Welle Abschnitte (146, 148) aufweist, der bzw. die Wirkabmessungen aufweist bzw. aufweisen, die größer als Durchbrechung der Scheibe im dichtgesinterten Zustand ist, die von der Welle durchsetzt ist.

11. Konstruktion hergestellt nach zumindest Anspruch 1,
**dadurch gekennzeichnet,**
**dass** die Konstruktion ein Zahnimplantat (30) mit einer einen zahntechnischen Aufbau tragenden Implantatkomponente als das erste Teil mit einer von einer Schraube (32) als das zweite Teil durchsetzten Durchgangsöffnung (34) ist, wobei die Schraube verbreiterte Enden wie Köpfe (38, 40) mit jeweils einem Querschnitt aufweist, der größer als der wirksame Querschnitt der Durchgangsöffnung ist.

## Claims

1. Method for manufacturing a multipart assembly of sintered oxide ceramic material, such as partially stabilized zirconia, comprising a first component (30, 144) that partially surrounds a second component (32, 141) in such a way that a detachment of the first component from the second component is impossible with undestroyed first and/or second component, employing the following process steps:
- Producing a single-part first shaped part (130, 44) and a single-part second shaped part (132, 41) from an oxide ceramic blank, whereby the first shaped part and the second shaped part are enlarged relative to the first component (30, 144) and the second component (32, 141) by a scaling factor that compensates for the shrinkage during sintering,
- Completely sintering the second shaped part to produce the second component (32, 141),
- Assembling the second component and the first shaped part and subsequently sintering them together,
**characterized in**
**that** as first shaped part (132, 44) is used one with an opening, whose effective cross-section after sintering is smaller than the effective cross-section of the second component (132, 41) in front of and behind the opening.

2. Method of claim 1,
**characterized in**
**that** as blank is used a green blank of pressed oxide ceramic powder.

3. Method of claim 1,
**characterized in**
**that** oxide ceramic powder is pressed by axial or isostatic pressing at a pressure p with 150 MPa ≤ p ≤ 350 MPa.

4. Method of at least one of the preceding claims,
**characterized in**
**that** as blank is used a presintered blank of pressed oxide ceramic powder material.

5. Method of at least one of the preceding claims,
**characterized in**
**that** the green blank is presintered at a temperature T₁ with T₁ ≥ 450°C, in particular 600°C ≤ T₁ ≤ 1200 °C for a time t₁ with 0.5 h ≤ t₁ ≤ 6 h.

6. Method of at least one of the preceding claims,
**characterized in**
**that** the presintered blank is dense-sintered at a temperature T₂ with 1300°C ≤ T₂ ≤ 1650 °C for a duration t₂ with 1h ≤ t₂ ≤ 3h.

7. Method of at least one of the preceding claims,
**characterized in**
**that** as oxide ceramic powder is used at least one metal oxide powder from the group of Al₂O₃, TiO₂, MgO, Y₂O₃, BaTiO₃, zirconia, zirconia mixed crystal powder.

8. Method of at least one of the preceding claims,
**characterized in**
**that** as zirconia mixed crystal powder is used one that consists of:
| | |
|---|---|
| 90 - 98 % by weight | zirconia |
| 0 - 4 % by weight | hafnium oxide |
| 1 - 7 % by weight | yttrium oxide |
| 0 - 1 % by weight | one of the oxides of the elements aluminum, gallium, germanium, indium, zinc, lead, the lanthanides |
| 0 - 2 % by weight | oxidation-dyeing additives, |
whereby dyeing additives preferably are:
Er₂O₃, Pr₆O₁₁, or Fe₂O₃.

9. Method of at least one of the preceding claims,
**characterized in**
**that** the blank is dense-sintered to 90% to 100%, in particular 96% to 100% of the theoretical density.

10. Assembly fabricated in accordance with claim 1,
**characterized in**
**that** a preferably flanged shaft constitutes the second component (141) and that a section of the shaft is surrounded by a pierced disk (144), whereby this section possesses relative to the shaft axis an offset that has - or the shaft possesses sections (146, 148) that have - effective dimensions that are greater than the opening of the dense-sintered disk, through which the shaft passes.

11. Assembly fabricated at least in accordance with claim 1,
**characterized in**
**that** the assembly is a dental implant (30), with an implant component carrying a dental structure constituting the first component, with an opening (34) through which passes a bolt (32) as the second component, whereby the bolt possesses widened ends, such as heads (38, 40), with a respective cross-section that is greater than the effective cross-section of the opening.

## Revendications

1. Procédé destiné à fabriquer une construction en plusieurs parties, constituée d'un matériau de céramique oxydée fritté, tel que de la zircone partiellement stabilisée, comprenant une première partie (30, 144), qui entoure partiellement une deuxième partie (32, 141) de manière telle qu'il est impossible de séparer la première partie de la deuxième partie tant que la première et/ou la deuxième partie est/sont intacte(s),
en procédant aux étapes suivantes :
- fabrication d'une première pièce moulée monobloc (130, 44) et d'une deuxième pièce moulée monobloc (132, 41) à partir d'une ébauche en céramique oxydée, sachant que par rapport à la première partie (30, 144) et à la deuxième partie (32, 141), la première pièce moulée et la deuxième pièce moulée sont agrandies selon un facteur d'agrandissement compensant le retrait au frittage,
- frittage intégral de la deuxième pièce moulée pour fabriquer la deuxième partie (32, 141),
- assemblage de la deuxième partie et de la première pièce moulée puis frittage commun,
**caractérisé en ce**
**qu'**en tant que première pièce moulée (132, 44) est utilisée une pièce avec une ouverture de passage dont la section transversale utile après le frittage est inférieure à la section transversale utile de la deuxième partie (32, 141) devant et derrière ladite ouverture de passage.

2. Procédé selon la revendication 1,
**caractérisé en ce**
**qu'**en tant qu'ébauche est utilisée une ébauche verte en poudre de céramique oxydée comprimée.

3. Procédé selon la revendication 1,
**caractérisé en ce**
**que** la poudre de céramique oxydée est comprimée par compression axiale ou de manière isostatique sous une pression p telle que 150 MPa ≤ p ≤ 350 MPa.

4. Procédé selon au moins une des revendications précédentes,
**caractérisé en ce**
**qu'**en tant qu'ébauche est utilisée une ébauche préfrittée composée de matériau poudreux de céramique oxydée comprimé.

5. Procédé selon au moins une des revendications précédentes,
**caractérisé en ce**
**que** l'ébauche verte est préfrittée à une température T₁ telle que T₁ ≥ 450 °C, en particulier 600 °C ≤ T₁ ≤ 1200 °C sur une durée t₁ telle que 0,5 h ≤ t₁ ≤ 6 h.

6. Procédé selon au moins une des revendications précédentes,
**caractérisé en ce**
**que** l'ébauche préfrittée est frittée à densité maximale à une température T₂ telle que 1300 °C ≤ T₂ ≤ 1650 °C sur une durée t₂ telle que 1 h ≤ t₂ ≤ 3 h.

7. Procédé selon au moins une des revendications précédentes,
**caractérisé en ce**
**qu'**en tant que poudre de céramique oxydée est utilisée au moins une poudre d'oxyde métallique du groupe Al₂O₃, TiO₂, MgO, Y₂O₃, BaTiO₃, zircone, poudre de cristaux mixtes de zircone.

8. Procédé selon au moins une des revendications précédentes,
**caractérisé en ce**
**qu'**en tant que poudre de cristaux mixtes de zircone est utilisée une poudre présentant la composition suivante :
| | |
|---|---|
| 90 à 98 % en poids | de zircone |
| 0 à 4 % en poids | d'oxyde de hafnium |
| 1 à 7 % en poids | d'oxyde d'yttrium |
| 0 à 1 % en poids | d'un des oxydes des éléments aluminium, gallium, germanium, indium, zinc, plomb, des lanthanides |
| 0 à 2 % en poids | d'additifs sous forme d'oxydes colorants, |
les additifs colorants étant de préférence :
Er₂O₃, Pr₆O₁₁ ou Fe₂O₃.

9. Procédé selon au moins une des revendications précédentes,
**caractérisé en ce**
**que** l'ébauche est frittée de 90 % à 100 %, en particulier de 96 % à 100 %, de la densité théorique maximale.

10. Construction fabriquée selon la revendication 1,
**caractérisée en ce**
**que** la deuxième partie (141) est de préférence une broche rainurée et qu'un segment de ladite broche est entouré par un disque ajouré (144), sachant que le segment présente un déport par rapport à l'axe de la broche ou que la broche présente des segments (146, 148), lequel ou lesquels présente(nt) des dimensions utiles supérieures à l'ouverture du disque à l'état fritté à densité maximale, qui est traversée par la broche.

11. Construction fabriquée selon au moins la revendication 1,
**caractérisée en ce**
**que** la construction est un implant dentaire (30) avec un composant d'implant portant une structure de technique dentaire en tant que première partie avec une ouverture de passage (34) traversée par une vis (32) en tant que deuxième partie, sachant que la vis présente des extrémités élargies telles que des têtes (38, 40) ayant respectivement une section transversale supérieure à la section transversale utile de l'ouverture de passage.
